# EUROPEAN PATENT SPECIFICATION

(11) **EP 2 859 822 B1**
(45) Date of publication and mention of the grant of the patent: **21.04.2021**
(21) Application number: 14004378.7
(22) Date of filing: 05.10.2012
(51) Int. Cl.: A47J 37/07, A47J 37/06

(54) **Apparatus for cooking food products**
Vorrichtung zum Kochen von Nahrungsmittelprodukten
Appareil de cuisson d'aliments

(30) Priority: 11.10.2011 AU 2011101304
(43) Date of publication of application: 15.04.2015
(62) Divisional of application: 12006927.3
(73) Proprietor: Reichlin, Andreas, 6405 Immensee (CH)
(72) Inventor: Reichlin, Andreas, 6405 Immensee (CH)
(74) Representative: Schaad, Balass, Menzl & Partner AG

(56) References cited:
- CH-B1- 699 047
- DE-B3-102008 044 925

## Description

The present invention relates to an apparatus for cooking food products as claimed in the preamble of claim 1.

Apparatuses for cooking food products have been known for a long time. Both in professional kitchens and in private homes, grilling apparatuses enjoy particular popularity. As a rule, these include a container in which the combustion material that outputs the thermal energy is burned, and a grill grate, which is arranged above the combustion material in such a manner that the desired cooking temperature is present for the food products on the grill grate. So-called grilling vessels are known in which the container has the form substantially of a hollow sphere. As a rule, charcoal is used as combustion material.

In the case of the known grilling methods, conventionally in a first stage the charcoal is actively ignited - as a rule by means of combustion aids - and, as a result, in a second stage glows. As a rule, it is not possible to cook the food products in the first stage because they become charred very quickly over the open flame. To this is added that when combustion aids are used, vapors can be generated, which impair the taste of the food products to be cooked and from time to time are even unhealthy. Cooking, consequently, is not considered until the second stage, i.e. as the charcoal is glowing. In this case, the window in which the cooking temperature is optimum is relatively short.

In the past, this problem has been met with so-called gas grills in which a highly combustible gas, such as propane, flowing into the grill container is ignited A20153EP/2 / 19.12.2014
and the resultant flame heats up lava rocks which serve as a heat accumulator. The disadvantage of such gas grills is that they can only be operated with a gas source (gas bottle). This can often be arduous to procure and its handling involves certain safety risks. To this is added that the unique taste of food products which is produced when cooking over glowing charcoal cannot be achieved using gas grills.

These disadvantages of the prior art have been taken into account with the apparatus described in CH-B-699047 and marketed under the name of "fire ring".

The said apparatus has a firebox and a heating surface which is developed in such a manner that the food products are cooked directly thereon, the heating surface being a continuous annular surface which runs substantially at a right angle to the rotation axis of the firebox. Said apparatus makes it possible to ensure an optimum cooking temperature over an arbitrarily long period whilst retaining the use of a wood-based combustion material.

However, it would be desirable to make available an apparatus which, whilst retaining the named advantages, can also be used on surfaces that are sensitive to heat radiation.

Consequently, it is the object of the present invention to make available an apparatus which, on the one hand, has the advantages of the apparatus known under the name of fire ring and which can also be used easily on heat-sensitive surfaces.

The object is achieved as claimed in the invention through the apparatus as claimed in claim 1. Preferred embodiments are defined in the dependent claims.

As claimed in claim 1, the invention consequently relates to an apparatus for cooking food products, said apparatus comprising a firebox and a heating surface.

The firebox has an axially symmetrical form and includes a box wall and a box edge, which defines the box wall. Said firebox is intended for accommodating a combustion material which, during combustion, outputs the thermal energy required for cooking.

The heating surface runs substantially at a right angle to the axis of the firebox and surrounds an opening arranged about the axis which ensures the supply of oxygen necessary for the combustion. As set out further below, the term "substantially at a right angle to the axis" includes embodiments where the heating surface is inclined slightly downwards in the direction of the axis and consequently is realized in a slightly funnel-shaped manner.

The idea of the heating surface is that the food products can be cooked directly thereon. The decisive factor here is that the heating surface is continuous; there is, consequently, no grate present as in conventional grills.

As claimed in the invention, between the box wall and the heating surface there is now arranged a false floor which is intended to support the combustion material. Both the false floor and the box wall have an outlet opening each for the removal of the residue of the combustion material from the apparatus.

As claimed in the present invention, the advantages obtained with the apparatus as claimed in CH-B-699047 can consequently be retained. In particular, the opening surrounded by the heating surface ensures that the combustion material ignited in the firebox - charcoal as a rule - is able to burn in an optimum manner. As the food products on the heating surface are not cooked directly over the open flame, the risk of charring is greatly reduced even at very high temperatures. Consequently, in this regard the identical advantages are produced as when using a cast iron pan. At the same time, however, when wood or charcoal is used as combustion material, the taste produced with grilling apparatuses is also maintained in the case of the present invention.

Moreover, the fact that the heating surface is continuous to a great extent prevents embers or ashes being carried away - for instance in windy conditions.

The heating surface is heated, on the one hand, from below by the wood burning in the firebox and, on the other hand, laterally by the flame which blazes through the opening. This means that on the heating surface there is a temperature gradient that reduces outwards with reference to the axis. Consequently, different temperatures are present at the same time on the heating surface, which allows for great flexibility during cooking. This is advantageous, in particular, when several different food products are being cooked at the same time. In addition, food products that are already cooked can be kept hot on the radially outermost, and consequently least hot region of the heating surface without becoming overcooked.

As claimed in the invention, through the space present between the false floor and the box wall thermal insulation is now additionally obtained; heat radiation onto the surface is consequently greatly reduced. Consequently, the present invention allows the apparatus also to be used on heat-sensitive surfaces.

Moreover, the present invention allows the heating surface to be arranged higher without the oxygen supply through the opening being insufficient through the resultant increase in the volume of the firebox. This is based, consequently, on the fact that by means of the false floor, the effective "combustion chamber", i.e. the space in which the combustion material is burned, is substantially smaller than the overall volume of the firebox. Consequently, the amount of combustion material required for the desired effect and the supply of oxygen necessary to the combustion is also smaller.

The elevated arrangement of the heating surface, on the one hand, means that it is possible to operate the apparatus when sitting or standing, which, precisely during frequent or longer operation, has a protective effect on the back of the user. Consequently, the apparatus is also suitable, in particular, for the restaurant sector where it stands up to ergonomic demands even when used over longer operating periods. In addition, when the height is selected in a corresponding manner, the heating surface is out of reach of children's hands, which is advantageous for safety reasons. In an advantageous manner, the height of the heating surface, in this case, is approximately 40 to 60 cm above the surface on which the apparatus stands.

By both the false floor and the box wall having an outlet opening each for the removal of the residue of the combustion material from the apparatus, emptying the combustion residue is possible in a very simple manner.

As claimed in a preferred embodiment, the false floor is in the form of a substantially general surface. Combustion material that has not yet burned is consequently prevented from dropping down into the thermal insulation chamber in an effective manner.

In a particularly preferred manner, the false floor is in the form of a spherical or ellipsoidal pan. This can ensure that the combustion material collects broadly in the middle, that is to say around the axis of the firebox and consequently directly under the opening.

The outlet openings are preferably arranged in the bottommost region, in each case, of the false floor and of the box wall. As a rule, the outlet openings are consequently arranged in such a manner that the axis of the firebox passes through said openings.

This means that, on account of gravity, the effect produced is that the ash located in the combustion chamber flows automatically into the outlet openings and consequently drops out of the apparatus having no active influence. By the outlet openings being arranged in the axial direction and consequently directly one above the other, this effect is amplified. The diameter of the outlet opening is preferably selected such that only completely burnt-out ash is able to drop from the combustion chamber and finally from the firebox.

The outlet opening is preferably annular. In a particularly preferred manner, the outlet opening of the box wall, in this case, has a greater diameter than the outlet opening of the false floor. In practice, a diameter of approximately 100 mm for the outlet opening of the box wall and a diameter of approximately 22 mm for the outlet opening of the false floor has proved optimum.

The term "cooking" refers to any conceivable type of preparation of food products which includes supplying heat to the food products, in particular frying/roasting or steaming.

As claimed in a further preferred embodiment, the outer edge of the heating surface is directly connected to the box edge of the firebox. It is particularly preferred for the outer edge of the heating surface to be welded to the edge of the firebox on the inside. By the heating surface being welded to the firebox under preliminary stress during production, it is possible to obtain a heating surface which is slightly inclined downwards in the direction of the axis. This ensures that any oil possibly applied to the heating surface or any food product juice coming out of the cooked food does not flow over the outer edge, but rather inwards, i.e. towards the axis. Any soiling of the surface lying around the apparatus as claimed in the invention is consequently avoided. In the named preferred embodiment, over and above this, the entire heating surface and the cooked food located thereon is illuminated by the flame which blazes through the opening defined by the inner circle of the annular surface, which has obvious advantages, in particular when using the firebox in the dark.

The inclination is preferably in the range of from 1 to 5°. Having such a small inclination present ensures that not only do the food products to be cooked lie securely on the heating surface, but also liquid constituents, such as food product juice or oil, cannot pass into the fire, but rather are piled up on the inner edge. The forming of tongues of flame, as occur frequently precisely in the case of conventional grilling apparatuses, is consequently prevented effectively in this embodiment of the present invention also.

In addition to the inside weld seam, a weld seam can be provided on the outside wall, which further optimizes the heat transfer from the firebox to the heating surface.

The false floor is connected to the inside of the box wall such that said false floor lies between box wall and heating plate once the heating plate has been mounted. As a rule, the connection between false floor and box wall is also effected by means of welding.

According to the present invention, the firebox has the form of hollow truncated cone. The heating surface is realized as an annular surface.

The outside radius R of the heating surface can have any conceivable dimension which the expert deems suitable for the described purposes.

The inside radius r of the heating surface is preferably in the range of from 0.3 to 1.0 m. The outside radius R is preferably in the range of from 0.4 to 1.5 m. Purely as an example, an outside radius R of 0.6 m or of 0.575 m is mentioned as these have produced particularly preferred results.
The ratio of the outside radius R to the inside radius r is preferably in the range of from 1.5:1 to 3:1.

Steel or cast ion are preferred as material for the apparatus as claimed in the invention, on account of their high thermal conductivity. Steel St52 is preferred in particular. In this case, as claimed in a particularly preferred embodiment, a steel thickness of approximately 6 mm is used for the firebox and a steel thickness of approximately 12 mm is used for the heating surface.

According to the invention, the firebox has the form of a truncated cone: it is, as a rule, mounted on a ring so as to be easily maneuverable. On account of the form of the firebox, the orientation of the heating surface can consequently be adjusted in a simple manner by changing the position of the firebox on the ring. In practice, a ring with a diameter of approximately 40 cm and a height of approximately 4 cm has proved particularly advantageous already in the case of the above-mentioned dimensions of the apparatus or of the heating surface thereof.

In addition, it is conceivable for an additional surface to be arranged above the box edge, said additional surface being arranged in a plane that runs substantially parallel to the plane of the heating surface. The heating surface and the additional surface define a heating chamber with a very good heat storage capacity, as the heat radiating from the heating surface is reflected by the further surface. The further surface preferably has the form of the heating surface, that is to say an annular surface, however a corresponding annular surface segment is also conceivable in particular.

Embodiments of the disclosure, which do not fall within the scope of the claims, are explained further by way of the figures, in which, in a purely schematic manner:
- figure 1: shows a perspective view of an apparatus with a firebox in the form of a sectioned sphere;
- figure 2: shows a side view of the firebox of the apparatus shown in figure 1 in the longitudinal central section through a sectional plane, which runs in the axial direction of the firebox, and the ring, on which the firebox is mounted;
- figure 3: shows a perspective view of an apparatus with a firebox in the form of a cylinder;
- figure 4: shows a side view of the firebox of the apparatus shown in figure 3 in the longitudinal central section through a sectional plane, which runs in the axial direction of the firebox, and the ring, on which the false floor is mounted;

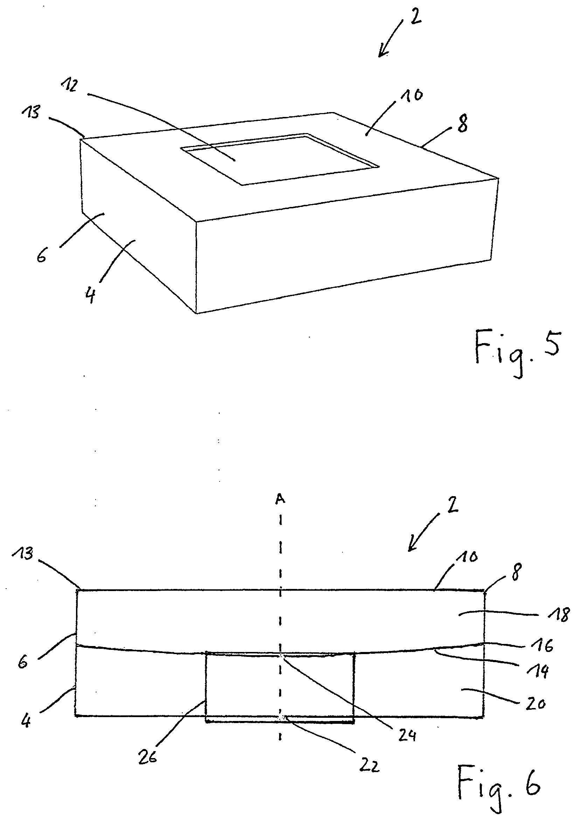

- figure 5: shows a perspective view of an apparatus with a firebox in the form of a cuboid; and
- figure 6: shows a side view of the firebox of the apparatus shown in figure 5 in the longitudinal central section through a sectional plane, which runs in the axial direction of the firebox, and the ring, on which the false floor is mounted.

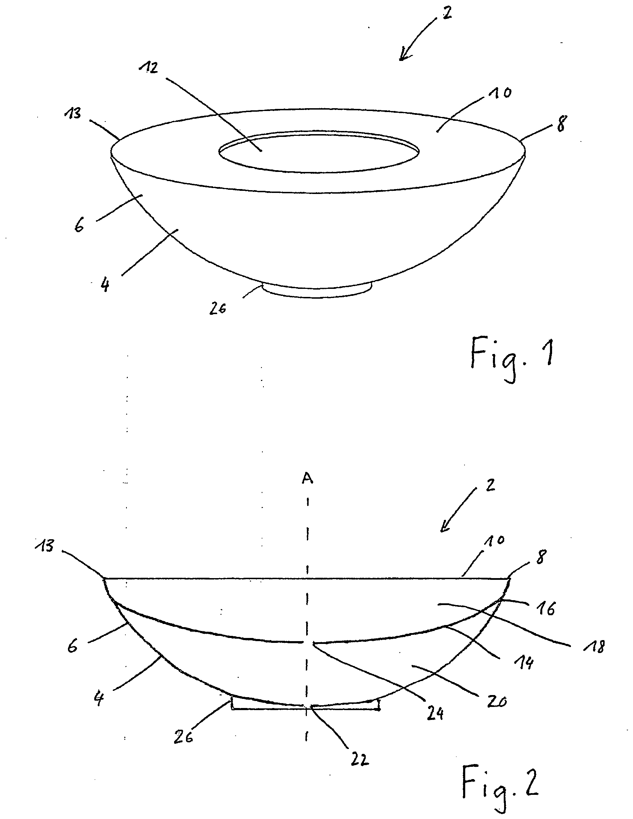

The embodiment of the apparatus 2 shown in figures 1 to 2 includes a firebox 4 in the form of a sectioned spherical pan with a rotation axis A. The firebox has a box wall 6 and a box edge 8 which defines the box wall.

The apparatus also includes a continuous heating surface 10 in the form of an annular plate, which surrounds an opening 12 arranged about the axis A and the outer edge 13 of which is welded in a flush manner to the box edge 8 of the firebox 4.

As shown in particular in figure 2, the heating surface 10 runs substantially at a right angle to the axis A of the firebox, it being slightly inclined downwards in the direction of the axis A and consequently being realized in a slightly funnel-shaped manner.

The apparatus has a false floor 14 in the form of an ellipsoidal pan, the axis of which correlates with the axis A of the firebox. At the region of its outside surface adjacent to the edge 16, the false floor 14 is welded to the inside of the box wall 6. Between the heating surface 10 and the false floor 14, in this case, a combustion chamber 18 is formed, whilst the box wall 6 and the false floor 14 enclose an insulation chamber 20.

Both the box wall 6 and the false floor 14 have an outlet opening 22 or 24 in the bottommost region for combustion residue, the diameter of the outlet opening 22 of the box wall 6 being smaller than that of the outlet opening 24 of the false floor 14.

In operation, a combustion material deposited on the false floor 14 is ignited, as a result of which the fire produced, in this case, on the one hand, outputs thermal energy from below onto the heating surface 10, i.e. directly onto its side facing the combustion chamber 18. In addition, by means of the fire blazing through the opening 12, thermal energy is output onto the inner edge, i.e. the edge of the heating surface 10 facing the opening 12, as a result of which a temperature gradient that reduces outwards in the radial direction is obtained on the heating surface.

In the apparatus shown in figures 1 and 2, the firebox 4 is mounted so as to be easily maneuverable on a ring 26. This makes it possible to adjust the orientation of the heating surface 10 in a simple manner by changing the position of the firebox 4 on the ring 26. As an alternative to this, it is also conceivable to weld the firebox 4 to the ring 26. As a rule, the ring is produced from the same material as the firebox, namely steel or cast iron.

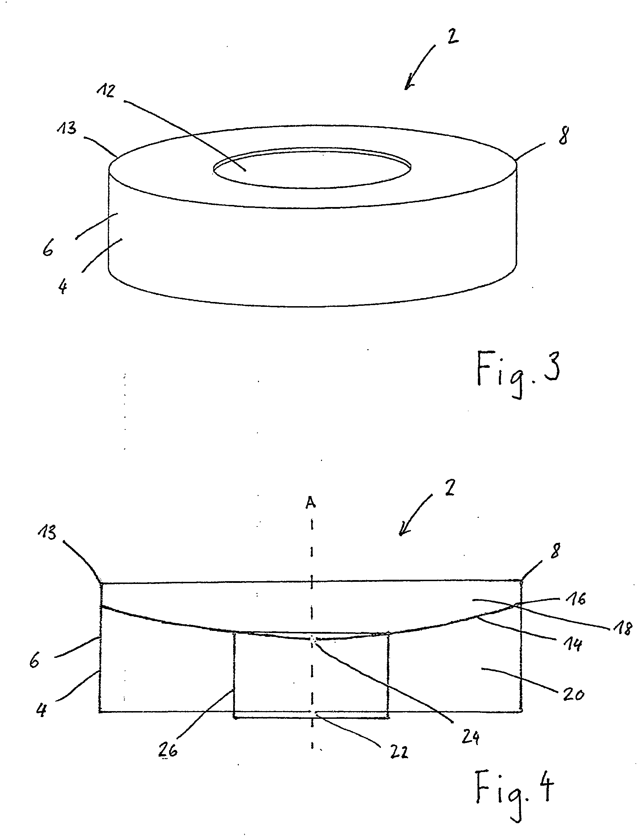

Contrary to the embodiment shown in figures 1 and 2, the firebox 4 in the embodiment shown in figures 3 and 4 is in the form of a cylinder. This is open on its bottom side, i.e. the side opposite the heating surface 10. In this embodiment also, the false floor 14 has the form of an ellipsoidal pan, the axis of which correlates with the rotation axis A of the firebox 4. Contrary to the embodiment shown in figures 1 and 2, in the embodiment shown in figures 3 and 4 the false floor 14 is mounted on the ring 26, which allows for a very simple adjustment of the orientation of the heating surface 10.

## Claims

1. An apparatus for cooking food products, said apparatus comprising a firebox (4) with an axially symmetrical form, the firebox (4) having a box wall (6) and a box edge (8), which defines the box wall, and being intended to accommodate a combustion material which, during combustion, outputs the thermal energy required for cooking, and having a continuous heating surface (10) which runs substantially at a right angle to the axis (A) of the firebox (4), surrounds an opening (12) arranged about the axis and is intended for the direct cooking of the food products, the heating surface (10) having the form of an annular surface, wherein between the box wall (6) and the heating surface (10) there is arranged a false floor (14) which is intended to support the combustion material, **characterised in that** the false floor (14) and the box wall (6) have an outlet opening (24 or 22) each for removing the residue of the combustion material from the apparatus, and **in that** the firebox (4) has the form of a hollow truncated cone.

2. The apparatus as claimed in claim 1, wherein the false floor (14) is realized in the form of a substantially general surface.

3. The apparatus as claimed in claim 1 or 2, wherein the outlet openings (22, 24) are arranged in the bottommost region in each case of the box wall (6) and the false floor (14).

4. The apparatus as claimed in one of the preceding claims, wherein the outer edge (13) of the heating surface (10) is directly connected to the box edge (8).

5. The apparatus as claimed in one of the preceding claims, wherein the outer edge (13) of the heating surface (10) is welded to the box edge (8) of the firebox (4) on the inside.

6. The apparatus as claimed in one of the preceding claims, wherein the heating surface (10) is inclined downwards in the direction of the rotation axis (A).

7. The apparatus as claimed in claim 6, wherein the inclination is in the range of from 1 to 5°.

8. The apparatus as claimed in one of the preceding claims, wherein the heating surface (10) has the form of an annular surface with an outside radius R in the range of from 0.4 to 1.5 m.

9. The apparatus as claimed in one of the preceding claims, wherein the heating surface (10) has the form of an annular surface with an inside radius r in the range of from 0.3 to 1.0 m.

10. The apparatus as claimed in one of the preceding claims, wherein the heating surface (10) has the form of an annular surface with a ratio of the outside radius R to the inside radius r in the range of from 1.5:1 to 3:1.

11. The apparatus as claimed in one of the preceding claims, wherein it is composed of steel or cast iron.

## Patentansprüche

1. Vorrichtung zum Garen von Lebensmitteln umfassend eine Feuerungswanne (4) mit einer achsensymmetrischen Form, wobei die Feuerungswanne (4) eine Wannenwandung (6) und einen die Wannenwandung begrenzenden Wannenrand (8) umfasst und dazu bestimmt ist, ein Verbrennungsmaterial aufzunehmen, das beim Verbrennen die zum Garen benötigte Wärmeenergie abgibt, und eine im Wesentlichen rechtwinklig zur Achse (A) der Feuerungswanne (4) verlaufende, durchgehende Heizfläche (10), welche eine um die Achse angeordnete Öffnung (12) umgibt und zum unmittelbaren Garen der Lebensmittel bestimmt ist, wobei die Heizfläche die Form einer Kreisringfläche aufweist, wobei zwischen der Wannenwandung (6) und der Heizfläche (10) ein Zwischenboden (14) angeordnet ist, der dazu bestimmt ist, das Verbrennungsmaterial zu tragen, **dadurch gekennzeichnet, dass** der Zwischenboden (14) und die Wannenwandung (6) je eine Auslassöffnung (24 bzw. 22) zur Entfernung der Rückstände des Verbrennungsmaterials aus der Vorrichtung aufweisen, und dass die Feuerungswanne (4) die Form eines hohlen Kegelstumpfs aufweist.

2. Vorrichtung gemäss Anspruch 1, wobei der Zwischenboden (14) in Form einer im Wesentlichen durchgängigen Fläche ausgebildet ist.

3. Vorrichtung gemäss Anspruch 1 oder 2, wobei die Auslassöffnungen (22, 24) im jeweils tiefstliegenden Bereich der Wannenwandung (6) und des Zwischenbodens (14) angeordnet sind.

4. Vorrichtung nach einem der vorhergehenden Ansprüche, wobei die Aussenkante (13) der Heizfläche (10) mit dem Wannenrand (8) unmittelbar verbunden ist.

5. Vorrichtung nach einem der vorhergehenden Ansprüche, wobei die Aussenkante (13) der Heizfläche (10) mit dem Wannenrand (8) der Feuerungswanne (4) innenseitig verschweisst ist.

6. Vorrichtung nach einem der vorhergehenden Ansprüche, wobei die Heizfläche (10) in Richtung zur Rotationsachse (A) hin nach unten geneigt ist.

7. Vorrichtung nach Anspruch 6, wobei die Neigung im Bereich von 1 bis 5° liegt.

8. Vorrichtung nach einem der vorhergehenden Ansprüche, wobei die Heizfläche (10) die Form einer Kreisringfläche mit einem Aussenradius R im Bereich von 0.4 bis 1.5 m aufweist.

9. Vorrichtung nach einem der vorhergehenden Ansprüche, wobei die Heizfläche (10) die Form einer Kreisringfläche mit einem Innenradius r im Bereich von 0.3 bis 1.0 m aufweist.

10. Vorrichtung nach einem der vorhergehenden Ansprüche, wobei die Heizfläche (10) die Form einer Kreisringfläche mit einem Verhältnis des Aussenradius R zum Innenradius r im Bereich von 1.5:1 bis 3:1 aufweist.

11. Vorrichtung nach einem der vorhergehenden Ansprüche, **dadurch gekennzeichnet, dass** sie aus Stahl oder Gusseisen ist.

## Revendications

1. Un appareil pour la cuisson d'aliments comprenant un foyer (4) de forme à symétrie axiale, ledit foyer (4) ayant une paroi (6) et un bord (8) délimitant la paroi et prévu pour contenir un combustible qui génère l'énergie thermique nécessaire pour la cuisson pendant sa combustion, et ayant une surface continue de chauffe (10) disposée essentiellement à angle droit par rapport à l'axe (A) du foyer (4) et entourant une ouverture (12) située autour de l'axe, ladite surface étant prévue pour la cuisson directe d'aliments, la surface de chauffe (10) ayant la forme d'une surface annulaire, dans lequel est disposé entre la paroi (6) et la surface de chauffe (10) un double fond (14) destiné à contenir le combustible, **caractérisé en ce que** le double fond (14) et la paroi (6) ont un orifice de sortie (24 ou 22), chacun pour éliminer les résidus du combustible de l'appareil, et **en ce que** le foyer (4) a la forme d'un cône tronqué creux.

2. L' appareil selon la revendication 1, où le double fond (14) est réalisé avec la forme d'une surface essentiellement continue.

3. L' appareil selon la revendication 1 ou 2, où les orifices de sortie (22, 24) sont disposés chacun dans la partie la plus au fond du récipient (6) et du double fond (14).

4. L' appareil selon l'une des revendications précédentes, où le bord extérieur (13) de la surface de chauffe (10) est directement connectée au bord (8).

5. L' appareil selon l'une des revendications précédentes, où le bord extérieur (13) de la surface de chauffe (10) est soudée au bord (8) du foyer (4) du côté intérieur.

6. L' appareil selon l'une des revendications précédentes, où la surface de chauffe (10) est inclinée vers le bas en direction de l'axe de rotation (A).

7. L' appareil selon la revendication 6, où l' inclinaison est dans un intervalle de 1° à 5°.

8. L' appareil selon l'une des revendications précédentes, où la surface de chauffe (10) a la forme d'une surface annulaire avec un rayon extérieur R dans un intervalle de 0.4 m à 1.5 m.

9. L' appareil selon l'une des revendications précédentes, où la surface de chauffe (10) a la forme d'une surface annulaire avec un rayon intérieur r dans un intervalle de 0.3 m à 1.0 m.

10. L' appareil selon l'une des revendications précédentes, où la surface de chauffe (10) a la forme d'une surface annulaire avec un rapport entre le rayon extérieur R et le rayon intérieur r dans un intervalle de 1.5:1 à 3:1.

11. L' appareil selon l'une des revendications précédentes, où il est fabriqué en acier ou en fonte.
